# EUROPEAN PATENT SPECIFICATION

(11) **EP 1 623 872 B1**
(45) Date of publication and mention of the grant of the patent: **18.11.2009**
(21) Application number: 05017069.5
(22) Date of filing: 05.08.2005
(51) Int. Cl.: B60P 7/08

(54) **Tie down hook member**
Verzurröse
Oeillet d'amarrage

(30) Priority: 06.08.2004 JP 2004230136
(43) Date of publication of application: 08.02.2006
(73) Proprietor: Piolax Inc., Yokohama-shi, Kanagawa-ken (JP)
(72) Inventor: Morita, Naoki, Yokohama-shi Kanagawa-ken (JP)
(74) Representative: Grünecker, Kinkeldey, Stockmair & Schwanhäusser Anwaltssozietät

(56) References cited:
- DE-A1- 10 043 641
- DE-U1- 29 500 242
- DE-U1- 29 911 871

## Description

The present invention relates to a hook member which is fitted to a luggage room of an automobile, for example, and on which a net or the like for preventing movement of a luggage is adapted to be hooked.

A conventional hook member of this type which is, for example, disclosed in document DE 10043641 A1 includes, a base frame 22 having a recess in its center part and fitted to a fitting face of a luggage room of an automobile by means of a bolt, a hook body 18 in a U-shape on which a hooking metal of the aforesaid net or the like is hooked, a cover body 17 which conceals a bolt head exposed inside the recess of the base frame, and a shaft for pivotally holding the hook body so as to rotate with respect to the recess of the base frame. In the conventional hook member according to document JP-A-2003-278735, for example, the base frame and cover body are integrally connected via thin-walled hinge pieces.

When the hook member is actually used, the aforesaid base frame is fitted to the fitting face of the luggage room by means of the bolt, and thereafter, the cover body is closed to cover the recess of the base frame by means of the thin-walled hinge pieces, thereby to conceal the bolt head which is exposed inside the recess of the base frame. Then, the hook body is pulled out from the recess of the base frame, and the hooking metal of the net or the like is hooked on the hook body, thus enabling the luggage in the luggage room to be effectively prevented from moving.

The conventional hook member has certainly had a merit of improving its outer appearance, because the bolt head for fixing the base frame to the luggage room can be covered with the cover body. However, in another aspect, because the cover body must be integrally coupled to the base frame by means of the thin -walled hinge pieces for that purpose, the thin-walled hinge pieces will be exposed above the surface of the base frame in an assembled state. As the results, presence of the thin-walled hinges themselves has been detrimental to the outer appearance of the hook member.

The invention has been made in order to effectively solve the above described problem, according to a first aspect of the invention, there is provided a hook member including a base frame which has a recess in a center part and bearing parts at both sides thereof, the base frame being fitted to a fitting face by means of a bolt, a hook body which is pivotally held by the bearing parts of the base frame so as to rotate between a contained position where it has entered into the recess and a pulled out position where it has been pulled out from the recess, a cover body which is pivotally held by the bearing parts of the base frame so as to rotate between a fallen state where it has entered into the recess thereby to conceal a bolt head of the bolt and an upright state where the bolt head is exposed, and releasable locking means which maintain the cover body in the upright state.

According to a second aspect of the invention according to the first aspect, the hook body has a U-shape, including both end parts which are pivotally held on the base frame and a hooking part in its center part, wherein the cover body is pivotally held on the base frame within a range clamped between both the end parts of the hook body.

According to a third aspect of the invention according to the second aspect, the hook body includes a connecting frame which closes an open end of the U-shape, and a pair of bearing parts projecting from the connecting frame.

According to a fourth aspect of the invention according to the third aspect, the cover body includes a body part which covers the recess of the base frame, and bearing parts projecting from the body part and positioned between the bearing parts of the hook body, wherein the cover body and the hook body are pivotally held by means of a single shaft.

According to a fifth aspect of the invention according to any one of the first to fourth aspect, the hook member further includes a metal bracket attached to an outer face of a bottom wall of the base frame, the metal bracket including a bolt insertion hole, a base plate which is fixed to the fitting face in a state clamped by the bolt head, and a pair of bearing parts which are folded from the base plate, whereas the base frame has an opening through which the bolt head is exposed inside the recess, and a locking part for locking the metal bracket in a state where the bolt head is clamped between the outer face of the bottom wall of the base frame and the base plate of the metal bracket.

According to a sixth aspect of the invention according to the fifth aspect, the bearing parts of the hook body are provided with stopper projections on respective outer faces thereof, whereas the bearing parts of the metal bracket are respectively provided with receiving pieces for restricting the most pulled out position of the hook body, by butting the stopper projections against the receiving pieces.

According to a seventh aspect of the invention according to any one of the first to sixth aspect, the cover body is molded of synthetic resin which is softer than the base frame, and provided with mounting face parts which are butted against the hook body in the contained position of the hook body.

According to a eighth aspect of the invention according to the fifth aspect, the hook body has cam faces on respective outer faces of the bearing parts, and the base frame is provided with a leaf spring which is in elastic contact with the cam faces of the hook body so as to elastically urge the hook body between the contained position and the pulled out position, the leaf spring being supported by the metal bracket through a cutout which is formed in the base frame.

Therefore, according to the first aspect of the invention, because the cover body is pivotally held with respect to the base frame, the bolt head exposed inside the recess of the base frame can be completely concealed, and the outer appearance will not be deteriorated. At the same time, because the cover body can be kept in the upright state by the locking means, work for fitting the base frame to the fitting face by means of the bolt will never be hindered by the presence of the cover body itself.

According to the second aspect of the invention, because the cover body is pivotally held on the base frame within a range clamped between both the end parts of the hook body, a width of the hook member itself can be downsized.

According to the third aspect of the invention, because the hook body includes the connecting frame which closes an open end of the U-shape, rigidity of the hook body itself will be enhanced, and at the same time, because a part of the cover body can be covered with the connecting frame, the outer appearance can be further improved.

According to the fourth aspect of the invention, because the single shaft is commonly used to pivotally hold the cover body and the hook body on the base frame, it is possible to downsize the hook member itself.

According to the fifth aspect of the invention, because the metal bracket has the base plate which is fixed to the fitting face in a state clamped by the bolt head, it is possible to fit the base frame to the fitting face in a state where the bolt head is clamped between the outer face of the bottom wall of the base frame and the base plate of the metal bracket, thus enabling the fitting operation to be easily conducted. At the same time, because the metal bracket also has its own bearing parts, the pivotally held state of the hook body and the cover body will be reinforced. Moreover, because the bolt head will not directly protrude into the recess of the base frame, a sufficient depth of the cover body can be obtained, and therefore, operation of pulling out the hook body into its pulled out position can be easily conducted.

According to the sixth aspect of the invention, because the bearing parts of the metal bracket are respectively provided with the receiving pieces to be butted against the stopper projections of the hook body, the most pulled out position of the hook body can be reliably restricted. Therefore, even though a large impact has been applied to the hook body, the base frame will not be seriously influenced, but the impact can be appropriately dealt with.

According to the seventh aspect of the invention, because the cover body is molded of synthetic resin which is softer than the base frame, even though the hook body has collided with the mounting face part of the cover body in the contained position of the hook body, an impact of the collision will be absorbed, and a sound of collision can be decreased.

According to the eighth aspect of the invention, the base frame is provided with the leaf spring for elastically urging the hook body between the contained position and the pulled out position, and the leaf spring is supported by the metal bracket through the cutout which is formed in the base frame. Therefore, although the base frame may be worn or collapsed, and load of the leaf spring may become unstable, in case where the leaf spring is directly supported by the base flame of synthetic resin, such anxiety will be eliminated according to the invention.

These and other objects and advantages of this invention will become more fully apparent from the following detailed description taken with the accompanying drawings in which:
Fig. 1 is an exploded perspective view of a hook member according to an embodiment of the invention;

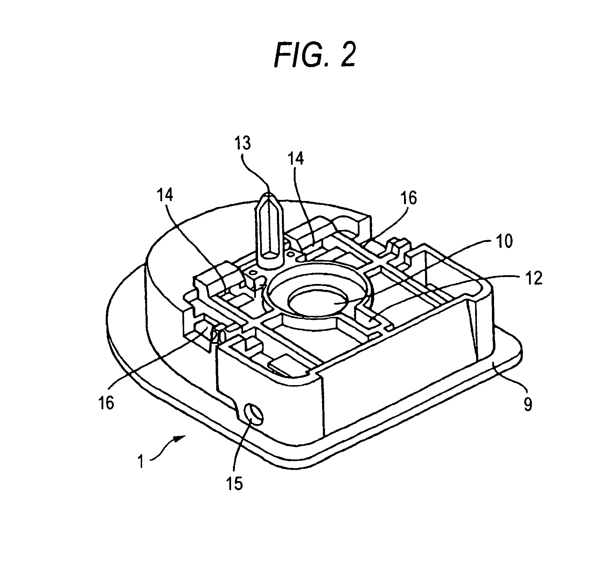

Fig. 2 is a perspective view of a base frame, as seen from a bottom side;
Fig. 3 is a side view of a hook body;
Fig. 4 is a sectional view of a cover body taken along a line A-A in Fig. 1;
Fig. 5 is a sectional view of the cover body in an upright state, as seen from one direction;
Fig. 6 is a sectional view of the cover body in the upright state, as seen from another direction;
Fig. 7 is a perspective view of the hook member showing a manner of fitting it to a panel;
Fig. 8 is a perspective view of the hook member showing a manner of tightening it to the panel by means of a bolt;
Fig. 9 is a sectional view of the hook member in a state fitted to the panel, as seen from one direction;
Fig. 10 is a sectional view of the hook member in a state fitted to the panel, as seen from another direction;
Fig. 11 is a sectional view of the hook member in a state fitted to the panel, as seen from another position in the other direction; and
Fig. 12 is a sectional view of the hook member showing a state where the hook body has been rotated to a pulled out position.

According to the invention, it is intended to improve an outer appearance of the hook member, by reliably concealing the bolt head which is exposed inside the recess of the base frame, while the cover body is always set in the fallen state. This can be attained owing to a structure that the cover body which will be rotated between the fallen state where the bolt head is concealed and the upright state where the bolt head is exposed is pivotally held on the base frame, and the cover body is positioned closer to the recess of the base frame than the hook body.

Now, the invention will be described in detail, referring to the drawings showing a preferred embodiment of the invention. The hook member according to the embodiment has been developed as a member to be fitted to a luggage room of an automobile and adapted to be hooked by a hooking metal of a net or the like for preventing movement of the luggage, in the same manner as in the prior art. The invention is characterized by employing the following structure.

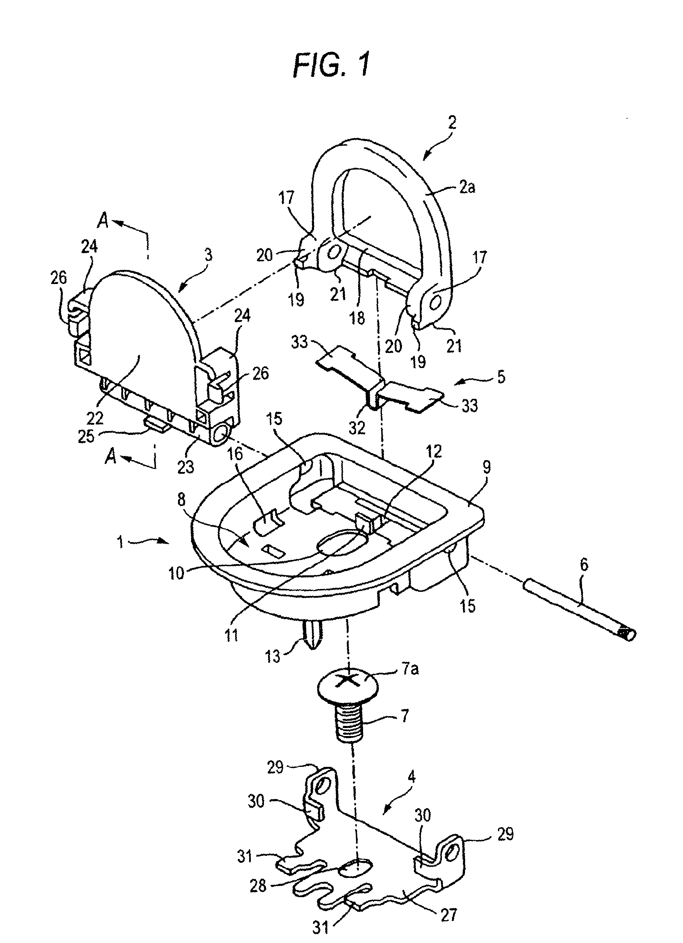

The hook member according to the embodiment includes, as shown in Fig. 1, a base frame 1, a hook body 2, a cover body 3, a metal bracket 4, a leaf spring 5, a shaft 6, and a bolt 7. Particularly, the base frame 1 is fitted to a fitting face of the luggage room by means of the bolt 7. The hooking metal of the above described net or the like is hooked on the hook body 2, and the cover body 3 covers a bolt head 7a which is exposed to the interior of the base frame 1. The hook body 2 and the cover body 3 are pivotally held on the base frame 1 by means of the shaft 6 which is common to both the bodies.

Now, the base frame 1 will be first described. The base frame 1 is integrally molded of hard synthetic resin such as nylon impregnated with glass, and in a horseshoe shape having a recess 8 in its center part and a flange 9 at its entire circumference. In a bottom wall defining the recess 8, there is formed an opening 10 which has a smaller diameter than the bolt head 7a, but enables the bolt head 7a to be exposed through and to be tightened at the opening 10. The base frame 1 is further provided with a lock wall 11 to be elastically contacted with a lock claw 25 of the cover member 3, which will be described below, integrally and uprightly on the bottom face of the recess 8 near an edge of the opening 10, and a cutout 12 into which an assemblingpart 32 of the leaf spring 5, which will be described below, is inserted is formed between the lock wall 11 and a side face opposed thereto.

On an outer face of the bottom wall of the base frame 1, a boss 13 to be inserted into a positioning hole which is formed in the fitting face of the luggage room of the automobile is uprightly provided, and a pair of locking holes 14 which are locking parts for locking projecting pieces 31 of the metal bracket 4, which will be described below, are formed at both sides of the boss 13. On the side faces of the base frame 1, there are formed bearing parts 15 for receiving the shaft 6 in cooperation with bearing parts 29 of the metal bracket 4, which will be described below, and locking holes 16 for locking locking claws 26 of the cover body 3, which will be described below.

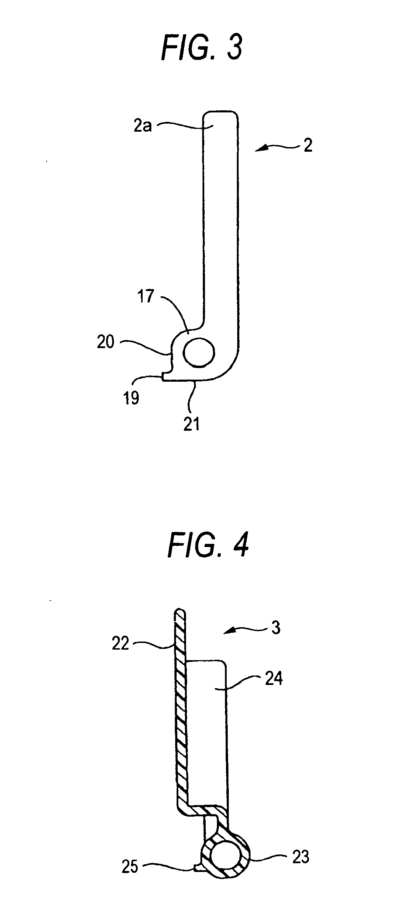

The hook body 2 is integrally molded of metal, and pivotally held on the base frame 1 so as to rotate between a contained position where the hook body 2 has entered into the aforesaid recess 8 of the base frame 1 and a pulled out position where it has been pulled out from the recess 8. As shown also in Fig. 3, the hook body 2 is essentially in a U-shape, and includes a pair of bearing parts 17 for receiving the shaft 6 in cooperation with the bearing parts 15, 29 of the base frame 1 and the metal bracket 4, at both ends thereof. Moreover, the hook body 2 has a hook part 2a to be hooked by the hooking metal of the net or the like, in its center part, and a connecting frame 18 which closes an open end of the U-shape. Accordingly, due to presence of this connecting frame 18, the hook body 2 itself will finally present a horseshoe shape, and the aforesaid pair of the bearing parts 17 protrude outwardly from the connecting frame 18. The bearing parts 17 are provided with stopper projections 19 respectively on outer faces thereof, and by butting the stopper projections 19 against receiving pieces 30 of the metal bracket 4, which will be described below, the most pulled out position of the hook body 2 itself will be restricted.

Further, each of the bearing parts 17 formed at both the ends of the hook body 2 has a first cam face 20 and a second cam face 21 in an intersecting manner, on an outer face thereof. A wing 33 of the leaf spring 5, which will be described below, will be elastically contacted with the cam faces 20, 21, thereby to elastically urge the hook body 2 between the contained position and the pulled out position.

The cover body 3 is integrally molded of synthetic resin which is softer than the above described base frame 1, such as polypropylene, and pivotally held on the base frame 1 so as to rotate between a fallen state where it has entered into the recess 8 of the base frame 1 thereby to cover the aforesaid bolt head 7a and an upright state where the bolt head 7a is exposed from the opening 10 of the base frame 1. As shown also in Fig. 4, the cover body 3 includes a body part 22 for covering the recess 8 of the base frame 1 which is dented as a step, a long size bearing part 23 which is projected from the body part 22 and located in a range between the bearing parts 17 formed at both the ends of the hook body 2, and mounting face parts 24 which are provided at both sides of the body part 22 and adapted to be butted against the hook body 2 in the contained position of the hook body 2. The lock claw 25 which will be elastically contacted with the lock wall 11 of the base frame 1 is formed on an outer face of the bearing part 23 in its center part, and a pair of the locking claws 26 which will be elastically locked to the aforesaid locking holes 16 of the base frame 1 are formed with slits, on respective side walls of the mounting face parts 24.

The metal bracket 4 is mounted for the purpose of reinforcing the outer face of the bottom wall of the base frame 1, and includes a base plate 27 having a bolt insertion hole 28 and fixed to the fitting face of the luggage room in a state clamped by the bolt head 7a, a pair of the bearing parts 29 folded inwardly from both side edges of the base plate 27, the receiving pieces 30 folded inwardly from the bearing parts 29 and adapted to be butted against the aforesaid stopper projections 19 of the hook body 2, and a pair of the projecting pieces 31 to be locked to the aforesaid locking holes 14 of the base frame 1. By inserting tip end portions of the projecting pieces 31 into the locking holes 14, in a state where the bearing parts 29 are positioned inside the bearing parts 15 of the base frame 1, the metal bracket 4 can be undetachably fitted to the outer face of the bottom wall of the base frame 1.

The leaf spring 5 includes the assembling part 32 which is folded in a U-shape and adapted to be inserted into the aforesaid cutout 12 of the base frame 1, and a pair of the wings 33 extending outwardly from the assembling part 32. When the assembling part 32 has been inserted into the cutout 12 of the base frame 1, the leaf spring 5 itself is held by the aforesaid metal bracket 4 which has been fitted to the outer face of the bottom wall of the base frame 1, and the wings 33 come into elastic contact with the aforesaid cam faces 20, 21 of the hook body 2. In case where the leaf spring 5 is directly held on the base frame 1 made of synthetic resin, the base frame 1 is likely to be worn or collapsed, and load of the leaf spring 5 will become unstable. However, in this embodiment, such anxiety will be eliminated, because the leaf spring 5 is supported by the metal bracket 4 through the cutout 12 which is formed in the base frame 1.

In case of assembling the hook member having the above described structure, the bolt 7 is first inserted into the bolt insertion hole 28 of the metal bracket 4, and thereafter, the projecting pieces 31 of the metal bracket 4 are inserted into the locking holes 14 which are provided on the outer face of the bottom wall of the base frame 1. Consequently, the metal bracket 4 will be undetachably fitted to the base frame 1, while the bolt head 7a is kept between the base plate 27 of the metal bracket 4 and the bottom face of the base frame 1. In this case, because the bolt head 7a is not directly projected into the recess 8, but exposed from the opening 10, it is possible to conduct the tightening work. Moreover, the bearing parts 29 of the metal bracket 4 are positioned inside the bearing parts 15 of the base frame 1.

Then, the assembling part 32 of the leaf spring 5 is inserted into the cutout 12 of the base frame 1, and thereafter, the bearing parts 23 of the cover body 3 are fitted between the bearing parts 17 which are formed on both the ends of the hook body 2 so as to be coaxially aligned therewith. Then, as they are, the bearing parts 17 of the hook body 2 are fitted between the bearing parts 29 of the metal bracket 4 so as to be coaxially aligned therewith, and the single shaft 6 is inserted from one of the bearing parts 15 of the base frame 1 to be passed through the bearing parts 29, 17, 23 and 15. As the results, the hook body 2 and the cover body 3 will be pivotally held on the base frame 1 so as to rotate.

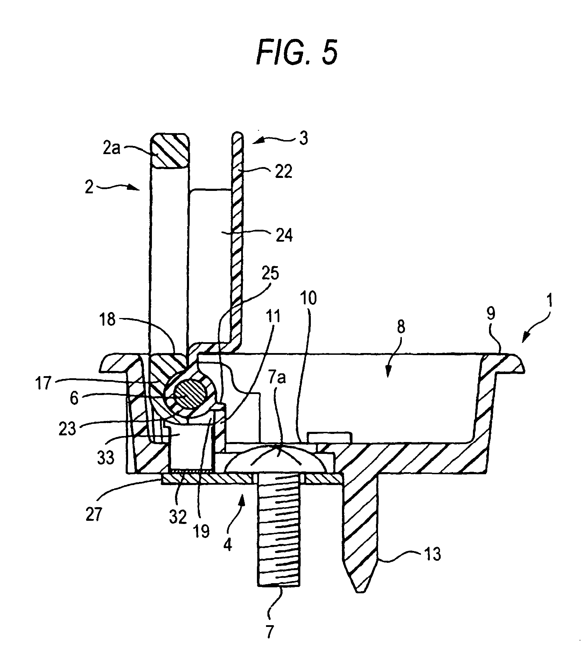

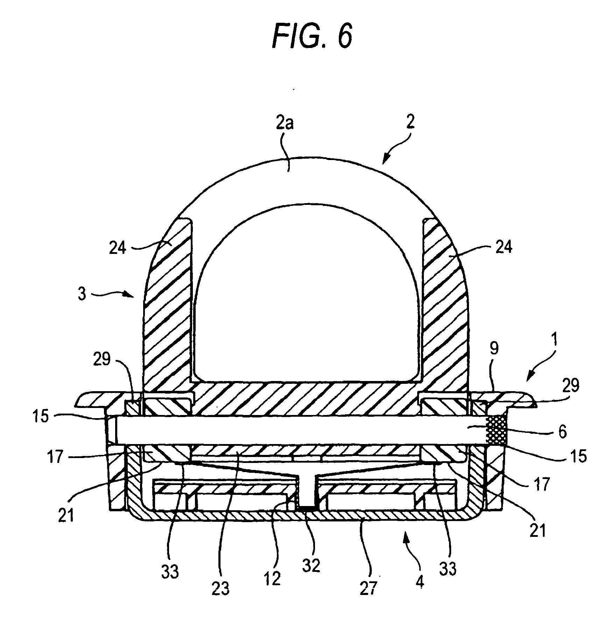

After the hook member has come into the assembled state, the hook member will be attached to a panel 34, which is the fitting face of the luggage room of the automobile, for actual use. In this case, prior to fitting the hook member, the hook body 2 is rotated to the pulled out position, and at the same time, the cover body 3 is also rotated to the upright state, as shown in Fig. 5. Then, the lock claw 25 of the cover body 3 will be brought into elastic contact with the lock wall 11 of the base frame 1 thereby to mechanicallymaintain the upright state of the cover body 3. In this state, the bolt head 7a will be exposed from the opening 10 of the base frame 1. Moreover, the hook body 2 can be held in its pulled out position without a backlash, because the second cam faces 21 of the hook body 2 are elastically contacted with the wings 33 of the leaf spring 5, as shown in Fig. 6.

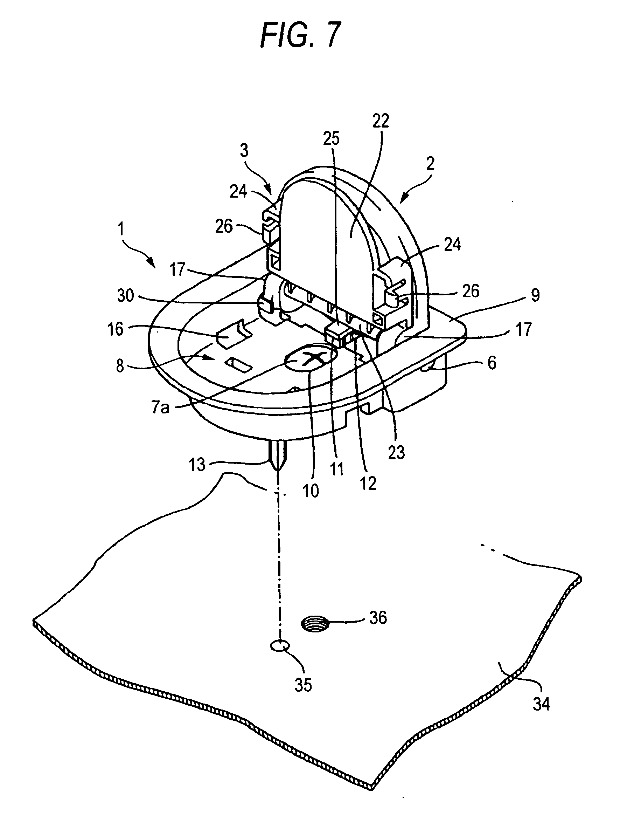

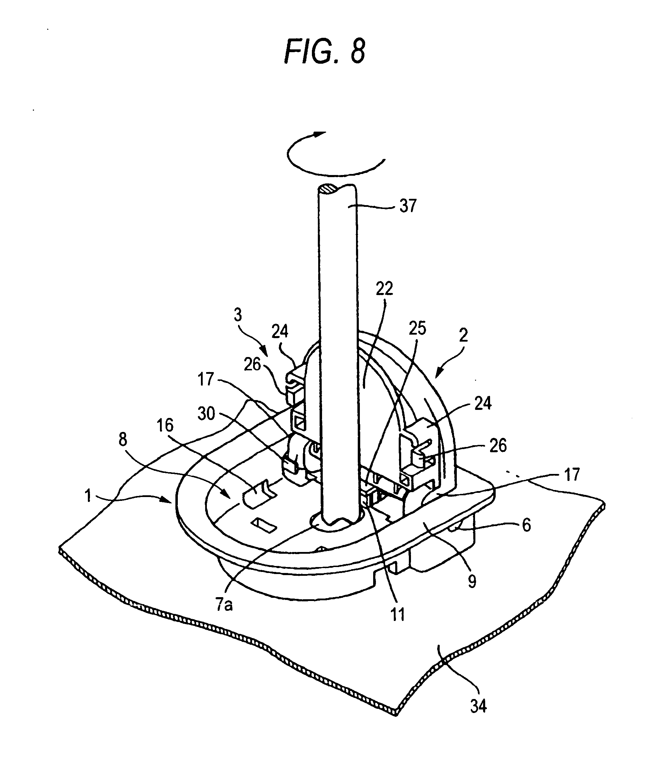

In this state, the boss 13 of the base frame 1 is aligned with a positioning hole 35 which is formed in the panel 34, as shown in Fig. 7, and at the same time, a tip end of the bolt 7 is aligned with a welding nut 36 which is provided in the panel 34. Then, a driver 37 is inserted from the recess 8 of the base frame 1 which is open, to tighten the bolt head 7a exposed from the opening 10, as shown in Fig. 8, whereby the hook member can be easily fitted to the panel 34.

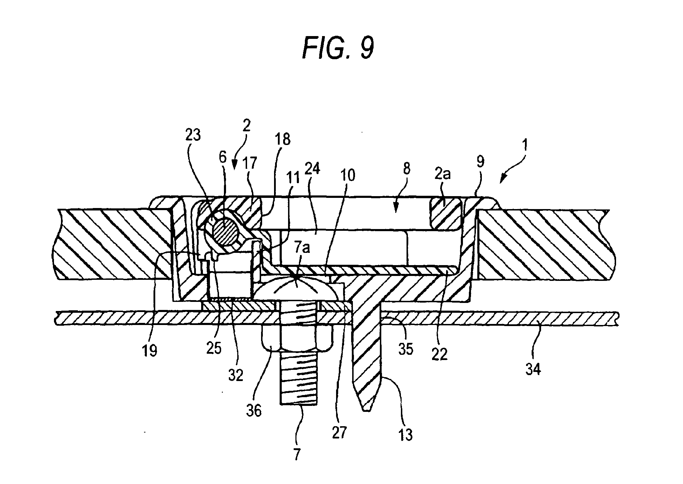

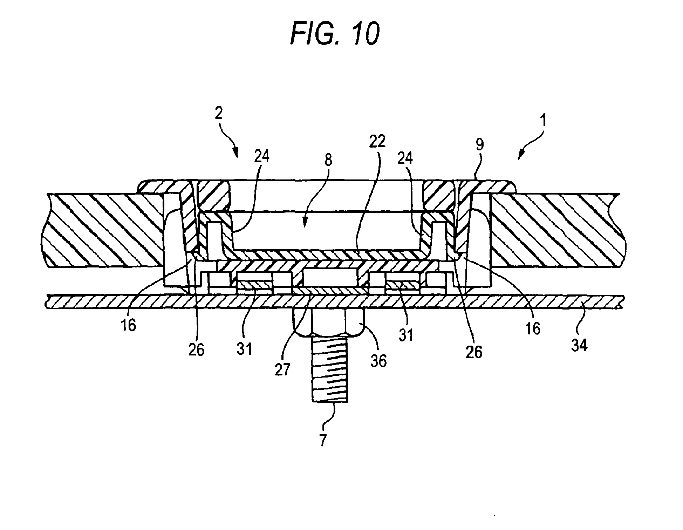

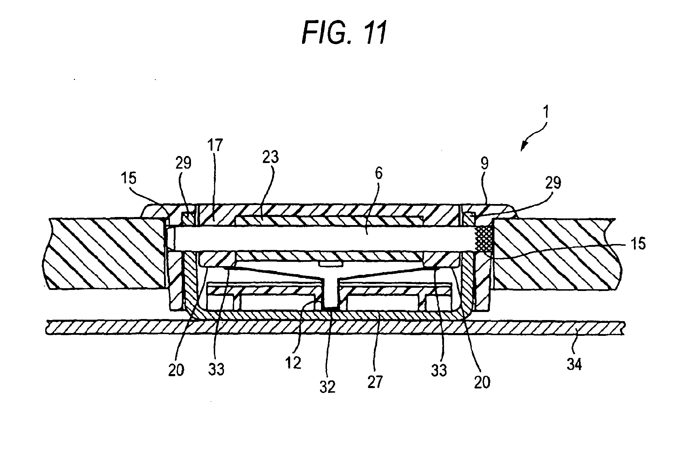

Thereafter, the hook body 2 is rotated to the contained position together with the cover body 3, as shown in Figs. 9 and 10. Then, the cover body 3 will completely cover the recess 8 of the base frame 1, having the locking claws 26 of its own locked to the locking holes 16 of the base frame 1, whereby the bolt head 7a which is exposed inside the recess 8 will be completely concealed. At the same time, the hook body 2 will be also rotated into the contained position. In this case too, the hook body 2 can be also held in its contained position without a backlash, because the first cam faces 20 of its own are in elastic contact with the wings 33 of the leaf spring 5, as shown in Fig. 11.

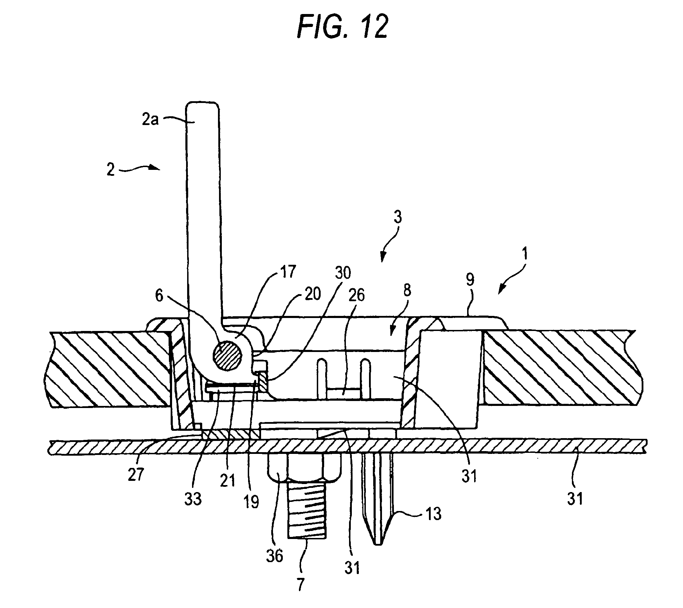

In case where the net or the like is used for the purpose of preventing movement of the luggage in the luggage room, the hook body 2 will be rotated to the pulled out position where it has been pulled out from the recess 8 of the base frame 1, as shown in Fig. 12, taking advantage of the dented shape of the body part 22 of the cover body 3. As the results, it will be possible to hook the hooking metal (not shown) of the net or the like on the hooking part 2a in the center of the hook body 2, and thus, the luggage will be prevented from moving. On this occasion, the stopper projections 19 of the hook body 2 will be butted against the receiving pieces 30 of the metal bracket 4 to restrict the most pulled out position of the hook body2, and therefore, the base frame 1 will be hardly influenced, even though a large impact has been applied to the hook body 2. Further, in this embodiment, because the bolt head 7a is not directly projected into the recess 8, and a sufficient depth of the body part 22 of the cover body 3 can be obtained, operation for pulling out the hook body 2 to the pulled out position can be easily conducted.

On the other hand, in case where the net or the like need not be used, the hooking metal of the net or the like will be unhooked from the hook body 2, and the hook body 2 will be rotated to the contained position. On this occasion, both the side parts of the hook body 2 will collide against the mounting face parts 24 of the cover body 3. However, because the cover body 3 is molded of synthetic resin which is softer than the base frame 1, as described above, an impact of the collision will be absorbed, and thus, sounds of the collision can be decreased.

In the hook member according to the invention, the cover body which can be rotated between the fallen state where the bolt head is concealed and the upright state where the bolt head is exposed is pivotally held on the base frame, and the cover body is positioned closer to the recess of the base frame than the hook body. Therefore, by setting the cover body always in the fallen state, the bolt head exposed inside the recess of the base frame can be reliably concealed, and the outer appearance will be improved. As the results, the hook member according to the invention is extremely advantageous, in case where it is fitted to the luggage room of the automobile, so that the hooking metal of the net or the like for preventing movement of the luggage may be hooked on the hook member.

## Claims

1. A hook member comprising:
a base frame (1) which has a recess (8) in a center part and bearing parts (15) at both sides thereof, the base frame being fitted to a fitting face by means of a bolt (7); a hook body (2) which is pivotally held by the bearing parts (15) of the base frame (1) so as to rotate between a contained position where it has entered into the recess (8) and a pulled out position where it has been pulled out from the recess (8); and a cover body (3)
**characterized in that**
the cover body (3) is pivotally held by the bearing parts (15) of the base frame (1) so as to rotate between a fallen state where it has entered into the recess (8) thereby to conceal a bolt head (7a) of the bolt (7) and an upright state where the bolt head (7a) is exposed; and
releasable locking means maintain the cover body (3) in the upright state.

2. The hook member according to claim 1, **characterized in that** the hook body (2) has an U-shape, including both end parts which are pivotally held on the base frame (1), and a hooking part (2a) in its center part; and
the cover body (3) is pivotally held on the base frame (1) within a range clamped between the both end parts of the hook body (2).

3. The hook member according to claim 2, **characterized in that** the hook body (2) includes a connecting frame (18) which closes an open end of the U-shape and a pair of bearing parts (17) projecting from the connecting frame (18).

4. The hook member according to claim 3, **characterized in that** the cover body (3) includes a body part (22) which covers the recess (8) of the base frame (1) and bearing parts (23) projecting from the body part (22) and positioned between the bearing parts (17) of the hook body; and
the cover body (3) and the hook body (2) are pivotally held by means of a single shaft (6).

5. The hook member according to any one of claims 1 to 4, further comprising:
a metal bracket (4) attached to an outer face of a bottom wall of the base frame (1), the metal bracket (4) including a bolt insertion hole (28), a base plate (27) which is fixed to the fitting face in a state clamped by the bolt head (7a), and a pair of bearing parts (29) which are folded from the base plate (27), whereas the base frame (1) has an opening (10) through which the bolt head (7a) is exposed inside the recess (8), and a locking part for locking the metal bracket (4) in a state where the bolt head (7a) is clamped between the outer face of the bottom wall of the base frame (1) and the base plate (27) of the metal bracket (4).

6. The hook member according to claim 5, **characterized in that** the bearing parts (17) of the hook body (2) are provided with stopper projections (19) on respective outer faces thereof, whereas the bearing parts (29) of the metal bracket (4) are respectively provided with receiving pieces (30) for restricting the most pulled out position of the hook body (2), by butting the stopper projections (19) against the receiving pieces (30).

7. The hook member according to any one of claims 1 to 6, **characterized in that** the cover body (3) is molded of synthetic resin which is softer than the base frame (1), and provided with mounting face parts (24) which are butted against the hook body (2) in the contained position of the hook body (2).

8. The hook member according to claim 5, **characterized in that** the hook body (2) has cam faces (20, 21) on respective outer faces of the bearing parts (17), and the base frame (1) is provided with a leaf spring (5) which is in elastic contact with the cam faces (20, 21) of the hook body (2) so as to elastically urge the hook body (2) between the contained position and the pulled out position, the leaf spring (5) being supported by the metal bracket (4) through a cutout (12) which is formed in the base frame (1).

## Patentansprüche

1. Hakenelement, das umfasst:
einen Grundrahmen (1), der eine Vertiefung (8) in einem Mittelteil und Auflageteile (15) an seinen beiden Seiten aufweist, wobei der Grundrahmen mittels einer Schraube (7) an einer Anbringungsfläche angebracht wird; einen Hakenkörper (2), der von den Auflageteilen (15) des Grundrahmens (1) schwenkbar so gehalten wird, dass er sich zwischen einer aufgenommenen Position, in der er in die Vertiefung (8) eingetreten ist, und einer herausgezogenen Position dreht, in der er aus der Vertiefung (8) herausgezogen worden ist; und
einen Abdeckkörper (3),
**dadurch gekennzeichnet, dass**
der Abdeckkörper (3) durch die Auflageteile (15) des Grundrahmens (1) schwenkbar so gehalten wird, dass er sich zwischen einem abgefallenen Zustand, in dem er in die Vertiefung (8) eingetreten ist und so einen Schraubkopf (7a) der Schraube (7) verbirgt, und einem aufrechtstehenden Zustand dreht, in dem der Schraubenkopf (7a) freigelegt ist; und
eine lösbare Arretiereinrichtung, die den Abdeckkörper (3) in dem aufrechtstehenden Zustand hält.

2. Hakenelement nach Anspruch 1, **dadurch gekennzeichnet, dass** der Hakenkörper (2) eine U-Form hat, die beide Endteile, die schwenkbar an dem Grundrahmen (1) gehalten werden, und einen Hakenteil (2a) in ihrem Mittelteil enthält; und
der Abdeckkörper (3) innerhalb eines Bereiches zwischen den beiden Endteilen des Hakenkörpers (2) festgeklemmt schwenkbar an dem Grundrahmen (1) gehalten wird.

3. Hakenelement nach Anspruch 2, **dadurch gekennzeichnet, dass** der Hakenkörper (2) einen Verbindungsrahmen (18), der ein offenes Ende der U-Form verschließt, sowie ein Paar Auflageteile (17) enthält, die von dem Verbindungsrahmen (18) vorstehen.

4. Hakenelement nach Anspruch 3, **dadurch gekennzeichnet, dass** der Abdeckkörper (3) einen Körperteil (22), der die Vertiefung (8) des Grundrahmens (1) abdeckt, sowie Auflageteile (23) enthält, die von dem Körperteil (22) vorstehen und zwischen den Auflageteilen (17) des Hakenkörpers angeordnet sind; und
der Abdeckkörper (3) und der Hakenkörper (2) mittels einer einzelnen Welle (6) schwenkbar gehalten werden.

5. Hakenelement nach einem der Ansprüche 1 bis 4, das des Weiteren umfasst:
eine Metallklammer (4), die an einer Außenfläche einer unteren Wand des Grundrahmens (1) angebracht ist, wobei die Metallklammer (4) ein Schraubeneinführloch (28), eine Grundplatte (27), die an der Anbringungsfläche in einem Zustand befestigt ist, in dem sie durch den Schraubenkopf (7a) festgeklemmt wird, und ein Paar Auflageteile (29) enthält, die von der Grundplatte (27) weg gebogen sind, während der Grundrahmen (1) eine Öffnung (10), über die der Schraubenkopf (7a) im Inneren der Vertiefung (8) freiliegt, sowie einen Verriegelungsteil zum Verriegeln der Metallklammer (4) in einem Zustand aufweist, in dem der Schraubenkopf (7a) zwischen der Außenfläche der unteren Wand des Grundrahmens (1) und der Grundplatte (27) der Metallklammer (4) eingeklemmt ist.

6. Hakenelement nach Anspruch 5, **dadurch gekennzeichnet, dass** die Auflageteile (17) des Hakenkörpers (2) mit Anschlagvorsprüngen (19) an jeweiligen Außenflächen derselben versehen sind, während die Auflageteile (30) der Metallklammer (4) jeweils mit Aufnahmegliedern (30) versehen sind, die die am weitesten herausgezogene Position des Hakenkörpers (2) einschränken, indem die Anschlagvorsprünge (19) an den Aufnahmegliedern (30) anschlagen.

7. Hakenelement nach einem der Ansprüche 1 bis 6, **dadurch gekennzeichnet, dass** der Abdeckkörper (3) aus Kunstharz geformt ist, das weicher ist als der Grundrahmen (1), und mit Anbringungsflächenteilen (24) versehen ist, die in der aufgenommenen Position des Hakenkörpers (2) an dem Hakenkörper (2) anliegen.

8. Hakenelement nach Anspruch 5, **dadurch gekennzeichnet, dass** der Hakenkörper (2) Kurvenflächen (20, 21) an jeweiligen Außenflächen der Auflageteile (17) aufweist und der Grundrahmen (1) mit einer Blattfeder (5) versehen ist, die in elastischem Kontakt mit den Kurvenflächen (20, 21) des Hakenkörpers (2) ist, so dass sie den Hakenkörper (2) elastisch zwischen der aufgenommenen Position und der herausgezogenen Position drücken, und wobei die Blattfeder (5) von der Metallklammer (4) über einen Ausschnitt (12) getragen wird, der in dem Grundrahmen (1) ausgebildet ist.

## Revendications

1. Élément d'accrochage, comprenant :
un cadre de base (1) qui présente un évidement (8) dans une partie centrale et des parties de palier (15) sur ses deux côtés, le cadre de base étant assemblé sur une face d'assemblage au moyen d'un boulon (7) ; un corps d'accrochage (2) qui est tenu en pivotement par les parties de palier (15) du cadre de base (1) de manière à tourner entre une position contenue dans laquelle il est entré dans l'évidement (8) et une position extraite dans laquelle il a été extrait hors de l'évidement (8) ; et un corps de couvercle (3)
**caractérisé en ce que**
le corps de couvercle (3) est tenu en pivotement par les parties de palier (15) du cadre de base (1) de manière à tourner entre un état retombé dans lequel il est entré dans l'évidement (8) pour dissimuler ainsi une tête de boulon (7a) du boulon (7) et un état redressé dans lequel la tête de boulon (7a) est exposée ; et
des moyens de blocage libérables qui maintiennent le corps de couvercle (3) dans l'état redressé.

2. Élément d'accrochage selon la revendication 1, **caractérisé en ce que** le corps d'accrochage (2) possède une forme en U, incluant deux parties terminales qui sont tenues en pivotement sur le cadre de base (1), et une partie d'accrochage (2a) dans sa partie centrale ; et
le corps de couvercle (3) est tenu en pivotement sur le cadre de base (1) à l'intérieur d'une plage, serré entre les deux parties terminales du corps d'accrochage (2).

3. Élément d'accrochage selon la revendication 2, **caractérisé en ce que** le corps d'accrochage (2) inclut un cadre de connexion (18) qui ferme une extrémité ouverte de la forme en U, et une paire de parties de palier (17) qui se projettent depuis le cadre de connexion (18).

4. Élément d'accrochage selon la revendication 3, **caractérisé en ce que** le corps de couvercle (3) inclut une partie de corps (22) qui couvre l'évidement (8) du cadre de base (1), et des parties de palier (23) qui se projettent depuis la partie de corps (22) et sont positionnées entre les parties de palier (17) du corps d'accrochage ; et
le corps de couvercle (3) et le corps d'accrochage (2) sont tenus en pivotement au moyen d'un axe unique (6).

5. Élément d'accrochage selon l'une quelconque des revendications 1 à 4, comprenant en outre :
une platine en métal (4) attachée sur une face extérieure d'une paroi inférieure du cadre de base (1), la platine en métal (4) inclut un trou d'insertion de boulon (28), une plaque de base (27) qui est fixée sur la face de montage dans un état serré par la tête de boulon (7a), et une paire de parties de palier (29) qui sont repliées depuis la plaque de base (27), tandis que le cadre de base (1) possède une ouverture (10) à travers laquelle la tête de boulon (7a) est exposée à l'intérieur de l'évidement (8), et une partie de blocage pour bloquer la platine en métal (4) dans un état dans lequel la tête de boulon (7a) est serrée entre la face extérieure de la paroi inférieure du cadre de base (1) et la plaque de base (27) de la platine en métal (4).

6. Élément d'accrochage selon la revendication 5, **caractérisé en ce que** les parties de palier (17) du corps d'accrochage (2) sont pourvues de projections d'arrêt (19) sur leurs faces extérieures respectives, tandis que les parties de palier (29) de la platine en métal (4) sont respectivement pourvues de pièces de réception (30) pour restreindre la position en la plus extraite du corps d'accrochage (2) par venue en butée des projections d'arrêt (19) contre les pièces de réception (30).

7. Élément d'accrochage selon l'une quelconque des revendications 1 à 6, **caractérisé en ce que** le corps de couvercle (3) est moulé en une résine synthétique qui est plus tendre que le cadre de base (1), et est pourvu de parties formant faces de montage (24) qui sont en butée contre le corps d'accrochage (2) dans la position contenue du corps d'accrochage (2).

8. Élément d'accrochage selon la revendication 5, **caractérisé en ce que** le corps d'accrochage (2) possède des faces de came (20, 21) sur des faces extérieures respectives des parties de palier (17), et le cadre de base (1) est pourvu d'un ressort à lame (5) qui est en contact élastique avec les faces de came (20, 21) du corps d'accrochage (2) de manière à forcer élastiquement le corps d'accrochage (2) entre la position contenue et la position extraite, le ressort à lame (5) étant supporté par la platine en métal (4) à travers une découpe (12) qui est formée dans le cadre de base (1).
